Europäisches Patentamt

European Patent Office

Office européen des brevets

(19)

(11) Publication number: **0 127 998**
**A2**

(12) # EUROPEAN PATENT APPLICATION

(21) Application number: **84303615.3**

(22) Date of filing: **29.05.84**

(51) Int. Cl.³: **B 60 C 21/08**

(30) Priority: **01.06.83 US 499893**

(43) Date of publication of application:
**12.12.84 Bulletin 84/50**

(84) Designated Contracting States:
**BE DE FR GB IT**

(71) Applicant: **POLYSAR LIMITED**

**Sarnia Ontario N7T 7M2(CA)**

(72) Inventor: **Timar, John**
**1122 Wilson Drive**
**Sarnia Ontario(CA)**

(72) Inventor: **Mohammed, Sheikh Aziual Hassen**
**1056 Guthrie Drive**
**Sarnia Ontario(CA)**

(72) Inventor: **Walker, John**
**705-845 Trillium Park**
**Sarnia Ontario(CA)**

(74) Representative: **Perry, Robert Edward et al,**
**GILL JENNINGS & EVERY 53-64 Chancery Lane**
**London WC2A 1HN(GB)**

(54) **Tubeless pneumatic tyre.**

(57) A tubeless pneumatic tyre which has an inner liner having puncture-sealing characteristics, comprising a puncture-sealing laminate having two outer halobutyl polymer-containing layers and an inner butyl polymer-containing layer, the inner layer of the laminate having been reacted with a peroxidic compound such that it has a Mooney viscosity (ML 1+ 4 at 100 C) of less than 12.

EP 0 127 998 A2

Croydon Printing Company Ltd

TUBELESS PNEUMATIC TYRE

This invention is directed to a tubeless pneumatic tire with an inner liner having puncture sealing characteristics, the inner liner comprising a laminate, the two outer layers of which are based on halobutyl and the central layer of which is based on butyl.

One objective of both the automotive industry and the tire industry has been to develop a self-sealing tire, by which is meant a tire having puncture-sealing properties. One approach to providing such a tire has been to provide a layer or coating of a material which will flow into and seal a hole resulting from a puncture and generally such a layer or coating is applied to the inside of the tire after it has been cured. U.S. Patent 3,981,342 teaches a puncture sealing tire having within the tire a puncture sealing layer comprising a low molecular weight elastomer the mixture being partially crosslinked. German published patent application 2,840,035 teaches the use as the sealing layer of cured alkyl acrylate-glycidyl monomer polymers. U.S. Patent 4,090,546 describes the sealing layer as being a mixture of a non-polar polymer, polybutene and white carbon. Japanese published patent application 80 15396 teaches coating the interior of the tire with a vulcanizable elastomer composition. U.S. Patent 4,216,812 describes a puncture sealant containing a lubricant and an amide wax applied as a layer to the interior of a tire. U.S. Patent 4,304,281 teaches a run-flat tire having a coating on its interior surface of a lubricating material. The use of a laminated puncture sealing strip in pneumatic tires is described in U.S. Patent 3,048,509, the laminated strip having layers of an unvulcanized styrene-butadiene polymer and softening and tackifying agents interposed between layers of vulcanized styrene-butadiene polymer. U.S. Patent 4,089,360 teaches a pneumatic tire having a laminate as an inner liner wherein the laminate has at least two groups of layers, each layer containing polymer and vulcanizing agent, one such group of layers containing paradichlorobenzene or thioetherpolythiol and the other such group of layers containing a specified amine or phenol compound, the laminate being exposed to radiation and assembled in the tire. U.S. Patent 4,228,839 discloses a method for making a pneumatic tire which contains a puncture sealant layer within the crown area of the tire by assembling the puncture sealant layer in the tire, vulcanizing the tire and subsequently irradiating the tire, the puncture sealant layer being a mixture containing one polymeric material that degrades on irradiation and a second polymeric material that crosslinks on irradiation.

The present invention describes a tubeless pneumatic tire having puncture sealing characteristics and a process of making same, the tire having as the inner liner a puncture sealing laminate wherein the two outer layers of the laminate comprise halobutyl polymer and the central layer of the laminate comprises butyl polymer.

In accordance with the invention, there is provided a tubeless pneumatic tire having puncture sealing characteristics which tire comprises an annular road-engaging tread, two annular beads, two sidewalls, each sidewall connecting a side of said tread to an annular bead, reinforcing body ply or plies extending from one bead to the other under the sidewall and tread portions, and an inner liner extending inside said reinforcing body ply or plies from one bead toe to the other bead toe, characterized in that said inner liner comprises a puncture sealing laminate having a first outer layer and a second outer layer overlapping an inner layer, said first and second outer layers being joined together at the area of overlap, said second outer layer being innermost of the laminate, wherein said first and second outer layers comprise halobutyl polymer and said inner layer comprises butyl polymer admixed with a peroxidic compound such that on vulcanization of the laminate alone or assembled in the tire the Mooney viscosity (ML 1 + 4 at 100°C) of the inner layer is reduced by reaction with said peroxidic compound to a value in the range of from about 2 to about 12.

Further in accordance with the invention, there is provided a process for producing a tubeless pneumatic tire having puncture sealing characteristics which process comprises the steps of assembling a tire having a road-engaging tread, two annular beads, two sidewalls, reinforcing body ply or plies and an inner liner, and shaping and vulcanizing said tire, characterized in that said inner liner is a puncture sealing laminate produced by providing a first outer layer, an inner layer and a second outer layer wherein said first and second outer layers overlap said inner layer and are joined together at the area of overlap, said first and second outer layers comprising halobutyl polymer, and said inner layer comprising butyl polymer admixed with a peroxidic compound such that on vulcanization of the assembled tire the Mooney viscosity (ML 1 + 4 at 100°C) of the inner layer is reduced by reaction with said peroxidic compound to a value in the range of from about 2 to about 12.

The invention will be more readily understood by reference to the drawings wherein:

FIGURE 1 is a cross-sectional view of a tire having a puncture sealing inner liner according to the invention;

4

FIGURE 2 is a cross-sectional view of a puncture sealing inner liner of the invention;

FIGURE 3 is a cross-sectional view of an alternative embodiment of a puncture sealing inner liner of the invention; and

FIGURE 4 is a cross-sectional view of one embodiment of forming a puncture sealing inner liner for use in a pneumatic tire.

The essence of this invention lies in providing an inner liner for a tire wherein the inner liner is a puncture sealing laminate, the inner layer of which is a polymer degraded by reaction with a peroxidic compound such that both when the inner liner is penetrated by a puncturing means and when the puncturing means is removed sealing of the inner liner will occur at the point of puncture, such sealing being by the degraded polymer of the inner layer of the laminate. The inner liner composition is such as to provide good heat ageing characteristics to allow retreading of the tires.

Accordingly, it is necessary to provide an inner liner of not too great thickness as to be impractical but thick enough to allow its manufacture, as by the combining together of three layers. It is also necessary to provide in the laminate forming the inner liner sufficient green strength for it to be self-supporting, especially during the stages of tire assembly and forming. It is also necesssry to provide an inner layer of the laminate that will flow into and seal holes that would otherwise be formed on penetration by or removal of a puncturing means. By the use as inner liner of a puncture sealing laminate, there is eliminated any problem prevalent in the prior art when the puncturing means enters the sidewall portion of the tire because the inner liner is present from bead toe to bead toe whereas in much of the prior art the interior coatings providing the sealing characteristics were only present at the tread area or the immediately adjacent shoulder and sidewall area of the tire.

The inner layer of the laminate forming the inner liner comprises butyl polymer. Butyl polymer is well known in the art and is a polymer of a $C_4$-$C_6$ isoolefin, preferably isobutylene, and a $C_4$-$C_6$ conjugated diolefin, preferably isoprene. A preferred butyl polymer contains from about 97 to about 99.5 weight per cent of isobutylene and from about 0.5 to about 3 weight per cent of isoprene. The butyl polymer is a solid polymer having a molecular weight, expressed as the Mooney (ML 1 + 8 at 100°C), of from about 25 to about 65, preferably from about 40 to about 60.

The peroxidic compound mixed with the butyl polymer may be selected from organic peroxides and inorganic peroxides which have appropriate half-lifes at the temperatures used for vulcanization of tires. Suitable organic peroxides include those which have appropriate half-lifes, that is preferably half-lifes of from about 10 to about 40 hours at temperatures of from about 110° to about 120°C. Examples of suitable organic peroxides include 2,5-dimethyl-2,5-bis(t-butylperoxy) hexane, 2,5-dimethyl-2,5-bis(t-butylperoxy) hexyne-3 and $\alpha,\alpha'$-bis(t-butylperoxy)di-isopropyl benzene which may be used as pure materials or as mixtures with inert fillers. The amount of such organic peroxides, defined on the basis of pure material, is from about 2 to about 4 parts by weight per 100 parts by weight of butyl polymer. Suitable inorganic peroxides include zinc peroxide and the amount of zinc peroxide which may be used is from about 3 to about 10 parts by weight per 100 parts by weight of butyl polymer.

Part of the butyl polymer of the inner layer may be replaced by a small amount of halobutyl polymer, especially bromobutyl. For example, up to 20 parts by weight of the butyl polymer may be replaced by an equivalent weight of halobutyl polymer. When part of the butyl polymer is replaced by halobutyl polymer, the peroxidic compound may only be selected from the organic peroxides.

The first outer layer and the second outer layer of the laminate comprise halobutyl polymer. Halobutyl polymer is well known in the art and is one of chlorobutyl or bromobutyl polymer and is produced by the chlorination or bromination of butyl polymer. A preferred chlorobutyl polymer contains from about 97 to about 99 weight per cent of isobutylene and from about 1 to about 3 weight per cent of isoprene, based on the hydrocarbon content of the polymer, and from about 0.5 to about 2.5 weight per cent of chlorine, based on the chlorobutyl polymer. A preferred bromobutyl polymer contains from about 97 to about 99 weight per cent of isobutylene and from about 1 to about 3 weight per cent of isoprene, based on the hydrocarbon content of the polymer, and from about 1 to about 4 weight per cent of bromine, based on the bromobutyl polymer. The chlorobutyl and bromobutyl polymers are solid polymers having a molecular weight, expressed as the Mooney viscosity (ML 1 + 8 at 125°C), of from about 25 to about 65.

The layers of the laminate forming the inner liner are compounded with ingredients well known in the art. The inner layer comprising butyl polymer preferably contains, per 100 parts by weight of butyl polymer, from about 40 to about 100 parts by weight of one or more types of carbon black, from about 5 to about 40 parts by weight as plasticizers of one or more fluid polyisobutylenes or copolymers containing polyisobutylene, from about 5 to about 30 parts by weight of one or more hydrocarbon oils especially paraffinic hydrocarbon oil, from about 2 to about 20 parts by weight of one or more tackifiers such as hydrocarbon or hydrogenated wood rosin tackifiers and from about 0.5 to about 3 parts by weight of other processing aids such as stearic acid and the like. There may also be present in the compound small amounts of a thixotropic material capable of providing structure to the compound. Such thixotropic material may be selected from the colloidal aluminium silicates and the fine particle size precipitated silicas and may be present in amounts up to about 20 parts by weight per 100 parts by weight of butyl polymer. Preferably, the compounded butyl polymer will have a compound Mooney viscosity (ML 1 + 4 at 100°C) of from about 20 to about 80, for ease of mixing, calendering or extrusion into sheets for use in the laminate. The compounding procedure is well known in the art and may utilize mill mixing or internal mixing under conditions well known for compounding of butyl polymer compounds. The first outer layer and the second outer layer are preferably but not necessarily essentially identical in composition and preferably contain, per 100 parts by weight of halobutyl polymer, from about 20 to about 80 parts by weight of one or more types of carbon black or from about 15 to about 40 parts by weight of carbon black and from about 30 to about 90 parts by weight of calcium carbonate or soft clay, from about 5 to about 30 parts by weight of one or more hydrocarbon oils especially paraffinic hydrocarbon oil, from about 2 to about 15 parts by weight of one or more tackifiers such as hydrocarbon or hydrogenated wood rosin tackifiers, from about 0.5 to about 3 parts by weight of other processing aids such as stearic acid and a vulcanization system. Suitable vulcanization systems include, per 100 parts by weight of halobutyl polymer, from about 2 to about 15 parts by weight of zinc oxide, from about 0.5 to about 2 parts by weight of one or more sulphur-containing accelerators such as, but not limited to, benzothiazyl disulphide, mercaptoimidazoline, tetraethylthiuram disulphide and from 0 to about 1 part by weight of sulphur. A preferred vulcanization system includes from about 2 to about 5 parts by weight of zinc oxide, from about 1 to about 1.5 parts by weight of a sulphur-containing accelerator and from 0 to about 0.5 parts by weight of sulphur. The compounding procedure is well known in the art and may utilize mill mixing or internal mixing, with the components of the vulcanization system being added in a separate step and at a lower temperature, such as from about 40° to about 70°C. Preferably, the compounded halobutyl polymer will have a compound Mooney viscosity (ML 1 + 4 at 100°C) of from about 30 to about 80.

The compounded butyl polymer and the compounded halobutyl polymer are separately formed into sheets or plies, such as by calendering. The laminate is prepared by plying together a first outer sheet of compounded halobutyl polymer, an inner sheet of compounded butyl polymer and a second outer sheet of compounded halobutyl polymer. In order to keep the weight of the laminate forming the inner liner within a reasonable and practical range, we prefer to use sheets or plies of compounded halobutyl polymer having a thickness of from about 0.3 to about 1.5 mm, preferably from about 0.4 to about 1 mm, and to use sheets or plies of compounded butyl polymer having a thickness of from about 0.7 to about 4 mm, preferably from about 1 to about 3 mm. The thickness of the sheets or plies of compounded halobutyl polymer may be the same or may be different - for example, the ply which will be innermost of the tire may be thinner than the other ply. In general, inner liners for use in passenger tires will be thinner than inner liners for use in trucks, other commercial vehicles or off-the-road tires. Procedures for forming such sheets or plies and for plying together such sheets are well known in the industry.

The tire is assembled by procedures well known in the industry. For example, on a tire building drum a laminate inner liner is laid down, the reinforcing ply or plies are located on the drum, the beads are applied followed by the tread portion and the sidewalls. The assembled tire is placed in a mold wherein it is heated to vulcanize the whole assembly. Such vulcanization conditions may range from times up to about 28 hours at a temperature of about 125°C for giant tires e.g. for earthmovers to times of as low as 4 minutes at temperatures of about 175°C for small tires. Generally, for passenger car tires, such vulcanization conditions may be for times of from about 5 to about 15 minutes at temperatures of from about 160° to about 175°C. Such tires may be of any of the known types, that is radial, bias or bias belted.

During the vulcanization, the normal curing of the rubber components occurs. The two outer halobutyl layers of the laminate inner liner undergo the normal curing and the inner butyl layer undergoes degradation due to reaction of the butyl polymer with the peroxidic compound thereby forming a polymeric material which will provide the puncture sealing characteristics.

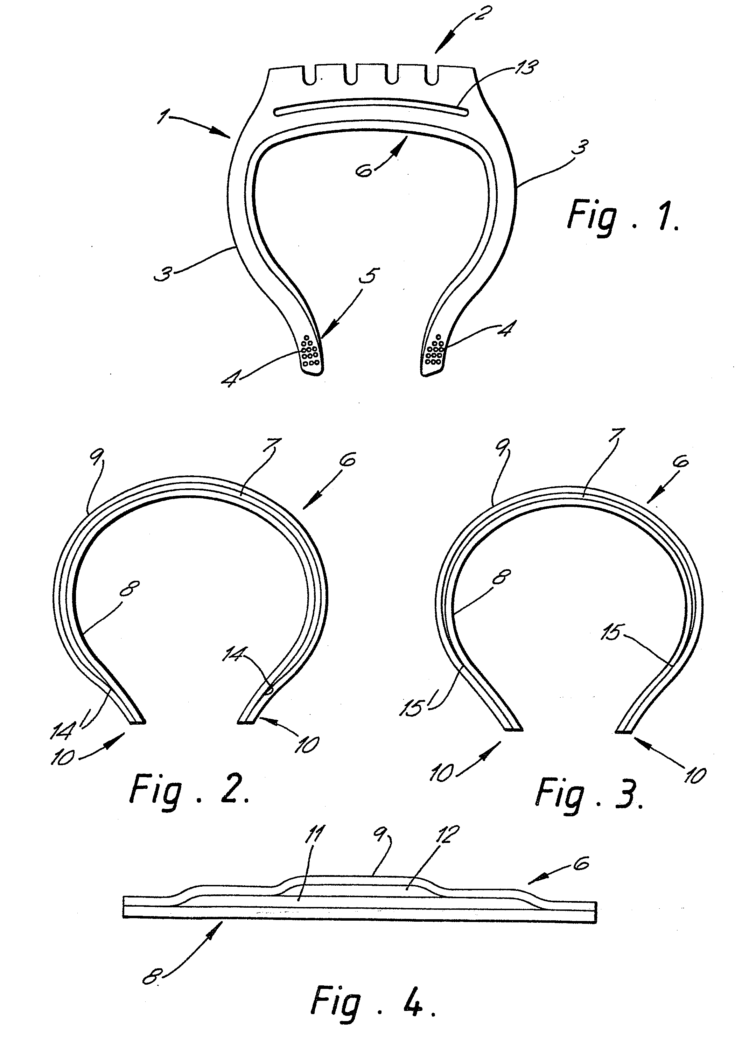

Referring now to the Figures, Figure 1 shows a cross-sectional view of a tire having a puncture sealing inner liner wherein the tire is generally shown at 1, the tread portion at 2, a reinforcing belt is shown at 13 (as would be used in a bias belted or radial tire), a sidewall at 3, an annular bead at 4 and the inner liner generally by 6, a reinforcing body ply (not shown) extending from one bead to the other. The inner liner 6 extends from one annular bead 4 to the other, preferably ending in the region of the bead toe at 5. Figures 2 and 3 show two embodiments of the inner liner 6, having a first outer layer 9, an inner layer 7 and a second outer layer 8, the inner liner terminating at 10 which would coincide approximately with the region of the bead toe. The inner layer, which is the sealing layer, may extend through the laminate from point 14' to the point 14 (as in Figure 2) which essentially coincides with a point closely adjacent to the bead toe of the tire or may extend through the laminate from point 15' to the point 15 (as in Figure 3) which essentially coincides with a wide, or even the widest, portion of the tire. In Figure 4, the outer first layer is shown at 9 and the outer second layer is shown at 8 of the inner liner 6 before it is transformed to the toroidal shape. The inner layer is shown as having two portions, a first portion being at 11 and a second portion being at 12. As is well known in the art, transforming the flat inner liner to the toroidal shape causes some thinning down of the thickness particularly at the central portion - hence, the planar form of the inner liner shown in Figure 4 is a preferred embodiment wherein the inclusion of the second portion 12 of the inner layer facilitates provision of an inner liner within the tire having an essentially even thickness of the inner layer.

The following examples illustrate the present invention and do not limit the scope thereof . All parts are parts by weight unless otherwise specified.

EXAMPLE 1

Laboratory equipment was set up to screen potential inner liners. An automobile tire was connected at the valve, by small diameter tubing to a source of air, a pressure gauge and to a test sample cell. The volume of air in the tire was large compared to the volume of air in the remaining items of the laboratory equipment and accordingly any leakage of the test inner liner located in the test sample cell would reflect what would happen to the air pressure in a tire.

Laminate inner liner samples were prepared for tests. One bromobutyl polymer compound was prepared according to the recipe shown in Table I, in which the bromobutyl polymer contained about 2 weight per cent of bromine and had a Mooney (ML 1 + 8 at 125°C) of about 30. This compound was prepared by mixing in an internal mixer with the starting temperature at 70°C and final dump temperature of about 125°C, the curative system being added on a mill at 50°C. Three butyl polymer compounds were prepared according to the recipes shown in Table II, in which the butyl polymer contained about 0.7 mole per cent of isoprene and the bromobutyl polymer is the same as that described above. These compounds were prepared by mixing in an internal mixer with a starting temperature of 50°C and completion of the mixing in 4 minutes.

12

## TABLE I

| Sample | 1 |
|---|---|
| Bromobutyl polymer | 100 |
| Carbon Black N-660 type | 60 |
| Stearic Acid | 1 |
| Tackifier (pentaerythritol ester of rosin) | 4 |
| Extender oil (paraffinic) | 15 |
| | |
| Curative System | |
| Zinc oxide | 3 |
| 2,2'-Dibenzothiazyl disulphide | 1.3 |
| Sulphur | 0.1 |
| | |
| Compound Viscosity (ML 1 + 4 at 100°C) | 45 |

## TABLE II

| Sample | 2 | 3 | 4 |
|---|---|---|---|
| Butyl polymer | 100 | 90 | 100 |
| Bromobutyl polymer | - | 10 | - |
| Polyisobutylene | 15 | 15 | 15 |
| Carbon black N-774 type | 60 | 60 | 60 |
| Extender oil (paraffinic) | 10 | 10 | 10 |
| Stearic acid | 1 | 1 | 1 |
| Tackifier (Wingtack 95) | 15 | 15 | 15 |
| Bentonite Clay | - | - | 5 |
| $\alpha,\alpha'$-bis(t-butyl peroxy) di-isopropyl benzene (40% on clay) | 7.5 | 7.5 | 7.5 |
| Compound Viscosity (ML 1 + 4 at 100°C) | 33 | 32 | 36 |

13

The bromobutyl polymer compound and the butyl polymer compounds were calendered into sheets using a three-roll calender with the rolls at temperatures of 100° to 115°C. Part of the bromobutyl polymer compound was calendered into a sheet of 0.5 mm thickness and part of it was calendered into a sheet of 1 mm thickness. The butyl polymer compounds were calendered into sheets of 2.5 mm thickness.

Laminate inner liners were prepared by plying a butyl polymer compound sheet onto a bromobutyl polymer compound sheet and a bromobutyl polymer compound sheet on top to form a laminate of:

bromobutyl-butyl-bromobutyl, the top bromobutyl polymer compound sheet being 0.5 mm thick (and forming the innermost layer in a tire), the other bromobutyl polymer compound sheer being 1 mm thick. Such laminates were prepared in duplicate, the second set being prepared with silicone paper sheets between each layer to allow each layer to be recovered after vulcanization and its properties determined.

The laminate inner liners were heated for 15 minutes at 166°C. The Mooney viscosity results are provided in Table III for the butyl layer of the vulcanized laminates having silicone paper separating each layer. The results show that the butyl polymer compound layers decrease in Mooney on heating demonstrating that degradation occurs of the polymer in this layer; no further degradation occurs on subsequent heating.

The laminate inner liners which did not contain silicone paper between each layer were also vulcanized by heating at 166°C for 15 minutes. The vulcanized laminates were then tested in the laboratory equipment. The test procedure involved placing a sample of the vulcanized laminate in the test sample cell, pressuring the system to

14

30 psi (2 kg/cm$^2$) with air, checking for leaks and re-assembling if necessary until leak-free, puncturing the laminate with a nail having a diameter of 4.8 mm, leaving the nail in for 1 minute, withdrawing the nail and monitoring the change in pressure every minute for 5 minutes and finally after a test time of 10 minutes. The procedure was repeated by puncturing with the nail through the same puncture and monitoring the pressure change and then repeated again. A laminate was judged to be a failure if the pressure in the cell dropped 15% or more at the end of the first minute and continued to drop over the total test time of 10 minutes or if the pressure in the cell dropped 15% or more over the total test time of 10 minutes for any of the three repeat tests. The results of the puncture testing are shown in Table III.

TABLE III

Mooney (ML 1 + 4 at 100°C) of butyl layer after heating at 166°C

| Butyl Compound | Mooney |
|---|---|
| 2 | 4 |
| 3 | 4 |
| 4 | 5 |

Puncture testing of laminates after vulcanization.

| Laminate Samples | Puncture Test Result |
|---|---|
| 1/2/1 | Pass |
| 1/3/1 | Pass |
| 1/4/1 | Pass |

15

EXAMPLE 2

Pneumatic tires were built to contain the laminate inner liner of the present invention. A three layer laminate inner liner compound in sheet form essentially as described in Example 1 was used for the construction of passenger tires size P185-80R-13 and testing of these tires is underway.

EXAMPLE 3

Following the procedure of Example 1 further laminate inner liner samples were prepared, the layers of the laminates being separated by silicone paper to allow each layer to be recovered after heating. The two outer bromobutyl compounds were identical with the recipe shown in Example 1 and sheets of 1 mm thickness were prepared. Three butyl polymers compounds, using the butyl polymer described in Example 1, as shown in Table IV, were prepared as sheets of 1 mm thickness. The laminates were then heated for 15 minutes at 166°C and the butyl layers were recovered and the Mooney (ML 1 + 4 at 100°C) was measured, with the results shown in Table IV, from which it is clear that the reaction with the peroxidic compound yields a degraded polymer suitable for use in the laminate.

16

## TABLE IV

Butyl polymer formulations

| | | | |
|---|---|---|---|
| Butyl Polymer | 100 | 100 | 100 |
| Polyisobutylene | 15 | 15 | 15 |
| Carbon Black N-774 | 60 | 60 | 60 |
| Extender Oil (Paraffinic) | 10 | 10 | 10 |
| Stearic Acid | 1 | 1 | 1 |
| Tackifier (Wingtack 95) | 15 | 15 | 15 |
| Zinc peroxide | 5 | 7.5 | 10 |
| | | | |
| Mooney (ML 1 + 4 at 100°C) | | | |
| - before heating | 32 | 31 | 30 |
| - after heating | 10 | 8 | 7 |

NOTE:
Zinc peroxide was approximately 60% pure.

CLAIMS

1. A tubeless pneumatic tyre, before vulcanisation, which comprises an annular road-engaging tread, two annular beads, two side-walls, one or more reinforcing body plies and an inner liner, characterised in that the inner liner is a laminate having an inner layer and first and second outer layers which overlap the inner layer and are joined together at the area of overlap, in which the first and second outer layers each comprise halobutyl polymer and the inner layer comprises butyl polymer admixed with a peroxidic compound, such that, on vulcanisation of the laminate alone or of the assembled tyre, the Mooney viscosity (ML 1 + 4 at 100 C) of the inner layer is reduced, by reaction with the peroxidic compound, to from 2 to 12.

2. A tyre according to claim 1, in which the or each halobutyl polymer is a chlorobutyl or bromobutyl polymer containing from 97 to 99% by weight isobutylene and from 1 to 3% by weight isoprene, based on the hydrocarbon content of the polymer, and with from 0.5 to 2.5% by weight chlorine based on the chlorobutyl polymer, or from 1 to 4% by weight bromine, based on the bromobutyl polymer, and in which the butyl polymer contains from 97 to 99.5% by weight isobutylene and from 0.5 to 3% by weight isoprene.

3. A tyre according to claim 2, in which the inner layer comprises, per 100 parts by weight thereof, from 80 to 99 parts by weight of the butyl polymer and from 1 to 20 parts by weight halobutyl polymer.

4. A tyre according to any preceding claim, in which the first and second outer layers each contain, per 100 parts by weight of halobutyl polymer, from 20 to 80 parts by weight carbon black, from 5 to 30 parts by weight hydrocarbon oil, from 2 to 15 parts by weight tackifier, from 0.5 to 3 parts by weight other processing aids, and a vulcanisation system, and in which the inner layer contains, per 100 parts by weight of polymer, from 40 to 100 parts by weight carbon black, from 5 to 40 parts by weight plasticiser, from 5 to 30 parts by weight hydrocarbon oil, from 2 to 20 parts by weight tackifier, from 0.5 to 3 parts by weight of other processing aids,, from 0 to 20 parts by weight of a thixotropic material capable of providing structure to the compound, and a peroxidic compound.

5.   A tyre according to claim 4, in which the vulcanisation system contains, per 100 parts by weight of halobutyl polymer, from 2 to 15 parts by weight zinc oxide, from 0.5 to 2 parts by weight sulphur-containing accelerator, and 0 to 1 part by weight sulphur.

6.   A tyre according to any preceding claim, in which the peroxidic compound is selected from organic peroxides and zinc peroxide, preferably in amounts of from 2 to 4 parts by weight and from 3 to 10 parts by weight, respectively, per 100 parts by weight butyl polymer, or is an organic peroxide when the inner layer is as defined in claim 3, preferably in an amount of from 2 to 4 parts by weight per 100 parts by weight of the mixture.

7.   A tyre according to any preceding claim, in which the first and second outer layers of the laminate are each from 0.3 to 1.5 mm thick, and wherein the inner layer of the laminate is from 0.7 to 4 mm thick.

8.   A tyre according to any preceding claim, after vulcanisation, in which the laminate is puncture-sealing and has a Mooney viscosity (ML 1+ 4 at 100 C) of from 2 to 12.

9.   A process for producing a tubeless pneumatic tyre according to claim 8, having puncture-sealing characteristics, which comprises assembling the tread, beads, side-walls, ply or plies and inner layer, and shaping and vulcanising the tyre.

10. A tyre according to claim 8 or a process according to claim 9, in which vulcanisation is conducted at from 160 to 175 C for from 5 to 15 minutes.

0127998

1/1

Fig . 1.

Fig . 2.

Fig . 3.

Fig . 4.